# EUROPEAN PATENT SPECIFICATION

(11) **EP 3 742 899 B1**
(45) Date of publication and mention of the grant of the patent: **30.08.2023**
(21) Application number: 19744287.4
(22) Date of filing: 17.01.2019
(51) Int. Cl.: A01N 59/08, A01N 65/00, A01N 65/06, A01N 65/36, A01N 27/00, A01N 31/04, A01N 49/00, A01N 65/18, A01N 61/02, A01P 1/00

(54) **METHOD OF TREATING CITRUS GREENING**
VERFAHREN ZUR BEHANDLUNG VON CITRUS-GREENING
PROCÉDÉ DE TRAITEMENT DU VERDISSEMENT DES AGRUMES

(30) Priority: 23.01.2018 US 201862620646 P
(43) Date of publication of application: 02.12.2020
(73) Proprietor: Greening Be Gone, LLC, Fredericksburg VA 22401 (US)
(72) Inventor: EVELAND, Winsor, Gebhard, Englewood, FL 34224 (US); BROWN, Kenneth, Earl, Fredericksburg, VA 22401 (US)
(74) Representative: Hofstetter, Schurack & Partner
(86) International application number: PCT/US2019/013980
(87) International publication number: WO 2019/147466

(56) References cited:
- WO-A2-03/020024
- US-A- 5 026 416
- US-A1- 2005 053 593
- US-A1- 2012 115 730
- US-A1- 2013 029 884
- US-A1- 2013 045 954
- US-A1- 2015 223 470
- US-A1- 2017 079 278

## Description

The field of the invention is the treatment of plants that are subject to gram-negative bacteria disease including citrus greening and viruses. The treatment described herein treats plant foliage or plant roots or alternatively both plants and roots with natural compositions including pine oil and salt water.

### Background

Citrus Huanglongbing (HLB), better known as citrus greening disease, was first detected in 2005 in the United States in citrus trees in the suburbs of Miami, Florida. Citrus Greening is a gram-negative bacterium named Candidatus Liberibacter, spread by the psyllids Trioza erytrea and Diaphorina citri, acting as natural vectors. The pathogens penetrate a plant's phloem and attack the vascular system, clogging the veins and drastically reducing the transport of water and nutrients. There are several varieties of Candidatus Liberibacter bacteria that has been detected in Asia, Africa, The United States, Mexico, and South and Central America.

Xylella Fastidiosa is another gram-negative bacterium disease that is also transmitted to plants by vectors. It was first detected in commerical grape vines in California in 1996. The glassy-winged leafhopper vectors are the cause for Pierce's disease in grapes, phony peach, quick decline syndrome in Olives/ Almonds/ Cherry/ Oleanders/ etc., and citrus variegated chlorosis in citrus. These diseases have currently reached epidemic levels in California, Italy, Spain and France.

At present, there is no known cure for either Candidatus Liberibacter or Xylella Fastidiosa bacterium diseases. Several experimental treatments have not proved effective against combating this disease. Oxy-tetracycline, streptomycin sulfate and copper have been the main chemicals available to treat bacterial plant diseases in the US. They have not proved successful in mitigating these gram-negative bacterial diseases. Thermal Therapy Heat Treatment equipment have been tried and found to be ineffective. A nine million dollar USDA funded "Rear Release Psyllids as Bio Control Agents Project" was also tried between 2012 and 2017. No positive results were documented during this five year trial as well.

WO 03/020024 A2 discloses a composition for prevention and/or treatment of infections in plants before or after the onset of disease comprising at least one terpene.

### Summary

Accordingly, it is an object of the present invention to provide a composition and method for treating plants that are exposed or otherwise prone to detrimental microbes including, but not limited to, gram-negative bacteria diseases. Using the composition described herein that includes at least a mixture of citrus oil, pine oil and salt water, the disease is mitigated and, in some cases, appears to be eliminated.

In one example, the present invention provides an antimicrobial composition for treatment of plants prone to microbial disease, wherein the composition includes citrus oil, pine oil and salt water. The relative amounts, as measured by volume, of the three components as compared with each other is
a) 5 - 75% citrus oil;
b) 0.5 - 60% pine oil; and
c) 15 - 95% salt water.
The antimicrobial composition may be used as a foliar application, or as a root application. The antimicrobial composition may further include a surfactant and the relative amount, as measured by volume, of the surfactant is 0.05 - 30%. The surfactant may include alkyl dimethyl benzyl ammonium chloride, hereinafter also referred to by its informal industry name as "benzyl quat". The antimicrobial composition may further include a growth stimulant and the relative amount, as measured by volume, of the growth stimulant is 0.1 - 20%. The growth stimulant may include humic acid and/or fulvic acid or mixtures thereof.

In another example, the present invention provides an antimicrobial composition for treatment of plants prone to gram-negative bacteria disease, wherein the composition includes citrus oil, pine oil, salt water, a surfactant, and a growth stimulant. The relative amounts, as measured by volume, of the five components as compared with each other is
a) 5 - 75% citrus oil;
b) 0.5 - 60% pine oil;
c) 15 - 95% salt water;
d) 0.05 - 30% surfactant; and
e) 0.1 - 20% growth stimulant.

In a further example, the present invention provides a method of treating a plant prone to gram-negative bacteria disease comprising the steps of providing a composition including citrus oil, pine oil and salt water, wherein the relative amounts, as measured by volume, of the three components as compared with each other is
a) 5 - 75% citrus oil;
b) 0.5 - 60% pine oil;
c) 15 - 95% salt water; and
applying the composition to the plant in an amount effective to mitigate the gram-negative bacteria disease.

In a still further example, a method of treating the foliage of a plant prone to gram-negative bacteria disease comprises the steps of providing a composition including citrus oil, pine oil, salt water, and a surfactant wherein the relative amounts, as measured by volume, of the three components as compared with each other is
a) 5 - 75% citrus oil;
b) 0.5 - 60% pine oil;
c) 15 - 95% salt water;
d) 0.05 - 30% surfactant; and
applying the composition to the foliage of the plant in an amount effective to mitigate the gram-negative bacteria disease.

In a still further example, a method of treating the roots of a plant prone to gram-negative bacteria disease comprises the steps of providing a composition including citrus oil, pine oil, salt water, and a growth stimulant wherein the relative amounts, as measured by volume, of the three components as compared with each other is
a) 5 - 75% citrus oil;
b) 0.5 - 60% pine oil;
c) 15 - 95% salt water;
d) 0.01 - 20% growth stimulant; and
supplying the composition to the roots of the plant in an amount effective to mitigate the gram-negative bacteria disease.

### Detailed Description

It has been discovered that a composition that contains at least citrus oil, pine oil, and salt water is effective in mitigating or eliminating detrimental microbials including, in one example, gram-negative bacteria disease in plants. This mixture is effective as an antimicrobial including against citrus greening and other gram-negative bacteria diseases. A mixture containing at least the foregoing components can be used as a foliar treatment by diluting a concentrated mixture of the compsition and spraying it on the leaves of a diseased plant or one that is prone to disease. Similarly, the combined composition can be used as a root drench or in an irrigation system to treat a diseased plant. Additional active components in a composition as disclosed herein may optionally include a surfactant (especially in a foliar application) and a growth stimulant (espcially in a root drench or irrigation application).

The antimicrobial compositions and methods herein are discussed in large part in the context of using the composition to fight gram-negative bacteria disease, as the composition was first discovered for use to fight citrus greening. However, the composition can be effective against other detrimental microbial diseases.

In one example, there may be a two-step approach to cure gram-negative bacteria diseases like the HLB Citrus Greening disease as well as other similar plant diseases. First, the treatment is directed to an entire citrus tree, including the roots and leaves, in the attempt to solve this problem. Tests have shown that if a user treats both the canopy and the root system with a foliar spray and a thorough root drenching, the tree will be able to reverse the disease. Continued use of the product will not only yield an owner a larger fruit set, but also better quality fruits that contain higher pound solids, than any conventional treatment programs. The present composition is a natural solution which will not contaminate the harvested fruit, the earth, and ground water. The purpose of this formula is to provide the infected tree with a natural systemic treatment to defeat the disease. The treatment increases the nutritional and anti-microbial components needed by the tree during the drenching of the roots in a three foot radius area around the tree trunk. The natural humic and fulvic acids in one example of the formula provide plant/root stimulant elements. These stimulants strengthen the roots and promote root growth. The stronger root system in turn increases the absorption of the nutritional minerals found in the humic/fulvic acids, salt water, as well as citrus peel blend ingredients. Furthermore, the stronger root system also fosters the absorption of the antimicrobial elements in the pine oil and citrus peel blend ingredients. It is believed that this anti-microbial component of the treatment gradually "eats away" at the bacteria clogging the tree's phloem tubes ( conceptually similar to how "Drano" un-cloggs clogged plumbing pipes in one's home ). Eventually, these anti-microbial elements clear the clogged phloem tubes of the tree. Clear phloem tubes allow water and treatment nutrients to flow throughout the tree including its trunk, branches, leaves, and fruit. With this extra emphasis on the revitalized root system, the treatment will dramatically improve the tree's own immune system. Thus the treatment provides the tree an opportunity to destroy this disease internally from the bottom/up. Additionally, the anti-microbial pine oil (with citrus peel blend) may also kill subterranean nematodes that tend to feed off weakened root systems ( as is the case with HLB ).

Furthermore, the foliar spray application of this anti-microbial (pine oil and citrus oil and salt water) formulation to the foliar canopy of the tree may be important in assisting the tree to kill the disease. The pine oil (enhanced with the citrus peel blend) also acts like an insecticide to kill vector psyllids (and psyllid eggs). The surfactant in the formula is intended to serve as a "sticker", so the treatment adheres to the leaves and branches of the tree. This adhesion allows more time for the treatment to be absorbed by the leaves. The anti-microbial properties of the pine oil (enhanced by the citrus peel blend) also serves as a psyllid (vector) repellant. By repelling these vectors, the tree is spared further infestation. The anti-microbial/nutritional treatment then travels from the leaves to the phloem of the tree. This enables the treatment to attack the bacteria in the tree's phloem system and at the same time provide much needed nutrition to the tree from the top down.

This double-barreled (top/down and bottom/up) approach to treating difficult plant diseases (like HLB Citrus Greening) is believed to be unique. This method of using an appropriate mixture of "nature's medicines" to provide many of the important minerals, ions, nutritional elements, and anti-microbial supplements, will enable the tree to achieve a Systemic Acquired Resistant agent (SAR). This is an effective approach to treat HLB/Citrus Greening and many other bacterial/viral diseases that face the agricultural industry.

Each of the active composition components and methods of their use will be discussed in more detail separately in the following.

Citrus oils are typically available from processing of citrus peels and other citrus juice byproducts. Orange peels from the various orange varietals can be used in the present composition. Other acceptable citrus oils include the following:
1) Citrus Rind
2) Lemon Peel
3) Grapefruit Peel
4) Lime Peel
5) Tangerine Peel
6) Orange Peel
7) D-Limonene
8) Citrus Terpenes
9) Citrus Oil
10) Orange Oil
11) Lemon Oil
12) Grapefruit Oil
13) Dipentene
14) Limonene
The effective amounts of citrus oil in an antimicrobial treatment may depend on the specific type of citrus oil.

Citrus oil is a favorable ingredient in the composition described herein because of its anti-microbial properties. Citrus oil has antimicrobial properties. Citrus Peel/oils are composed of monoterpenes. For instance, D-Limonene is a major component of the oil extracted from citrus rind or peel. D-limonene is known to inhibit growth of bacteria, fungi, and certain parasites. Orange oil is listed as GRAS (generally regarded as safe) by FDA as an essential oil and natural extract at 21CFR 182.20, which means that the composition is not toxic to humans or animals. D-Limonene is listed as GRAS by FDA as a synthetic flavoring substance and adjuvant at 21CFR 182.60.

Importantly, citrus oil is a natural oil that avoids many of the drawbacks of other antimicrobials. Citrus oils are not listed as Hazardous Air Pollutants (HAP) by the U.S. EPA. Citrus oils are not listed as endocrine disruptors by the U.S. EPA. Citrus oils not are listed in the National Toxicology Program's (NTP) report on carcinogens by the U.S Department of Health and Human Services. Citrus oils are not listed as carcinogens by the International Agency for Research on Cancer (IARC). Citrus oils are not regulated as ozone depleting compound by the Montreal Protocol. Citrus oils are not listed as Toxic Air Contaminants (TAC) by the California Air Resources Board. One or more of the foregoing drawbacks may be present in existing plant treatments.

Natural pine oil is derived from turpentine which is distilled from gum rosin, tall oil, or wood rosin. Gum rosin is harvested by tapping the live pine tree. Tall oil is a by-product of the paper/pulp process. Wood rosin is chemically extracted from the stumps of pine trees. Pine oils can also be extracted from boiling pine needles. There are also additional methods to extract pine oils from the sources mentioned above. Synthetic pine oil is derived from the hydration of turpentine (or its constituent components terpenes and pinenes) in a reactor followed by fractionation to separate the different cuts of alcohols, terpene hydrocarbons, and other fractions. It should be noted that all references to pine oil in this formulation refer to either natural or synthetic pine oil. The EPA registered pine oil products can also be used in the present composition. Currently there are 12 active pine oil registrations (1 Registered Pine Oil Manufacturer) registered under Section 3 of the Federal Insecticide, Fungicide, and Rodenticide Act (FIFRA). Pine oils are generally effective for and are used as a disinfectant, sanitizer, mircobicide/microbistat, virucide, and insecticide. Some of the target pests when pine oil is used include brevibacerium ammoniagenes, candida albicans, enterobacteraerogenes, escherichia coli, gram-negative enteric bacteria, household germs, gram-negative household germs such a those causing salmonellosis, herpes simplex types 1 and 2, influenza type A, influenza virus type A/Brazil, influenza virus type A2/Japan, intestinal bacteria, klebsiella pneumoniae, odor-causing bacteria, mold, mildew, pseudomonas aeruginosa, salmonella choleraesuis, salmonella typhi, salmonella typhosa, serratia marcescens, shigella sonnei, staphylococcus aureus, streptococcus faecalis, streptococcus pyogenes, trichophyton mentagophytes. It should be noted that both Candidatus Liberibacter and Xylella Fastiodosa that cause citrus greening are gram-negative bacteria.

One acceptable pine oil for use in the present composition is ElPinol 85 Pine Oil (including ElPinol 85), which is an approved EPA registered active ingredient for indoor anti-microbial disinfectant applications. ElPinol 85 EPA Registration # is 11668-3 and it has been registered since May 14, 1974. In June 2017 ElPinol 85 was approved by The National Association for Sustainable Agriculture, Australia (NASAA) as the active ingredient for outdoor organic agricultural herbicide applications. ElPinol85's purpose as the active ingredient in the present composition in the example of citrus greening is to assist in eradicating the C. Liberibacter / Xylella Fastidiosa bacteria, eradicating the infectious vectors from the leaves of the diseased citrus trees, and repelling these vectors from re-infecting the citrus trees or other prone plants. It is a natural substance fractured from Gum Turpentine, which is derived from pine resin. Its added safety advantage is that documented toxicological studies over the past 40 plus years prove that pine oil is not harmful to humans or animals.

The chemical composition of ElPinol 85 includes the following compounds that are believed to contribute to the effectiveness of this composition:
1) Alpha-Terpineol
2) Terpinolene
3) Limonene
4) α - pinene
5) Myrcene
6) Fenchyl Alcohols (α & β )
7) Terpene Alcohols
ElPinol85 (85% Terpene Alcohols) is one pine oil ingredient to use in this present composition. Other liquid terpenes that can serve as substitutes for this pine oil ingredient include:
1) Pine oil with a range of Terpene Alcohols from 5% to 100%
2) Dipentene
3) Gum Turpentine
4) Natural pine oil
5) α-Pinene (derived Gum Turpentine, Crude Tall Oil, and Crude Sulfate Turpentine)
6) Gum Resin and Gum Rosin (solid or liquid)
7) Wood Resin and Wood Rosin (solid or liquid)
8) Tall Oil and Tall Oil Fatty Acids
9) Castor Oil
10) Oleoresins
11) Gum Turpentine/Gum Rosin Oil blend.

Salt water is also an ingredient in the present composition. This salt water is sea water that is sourced from any sea or ocean. This seawater contains many natural ion ingredients that help to eradicate the unhealthy bacteria and also provide nutrients to a plant.

Especially in compositions for use in foliar applications, a surfactant is a benefit by improving the dispersion of the composition on plant leaves and branches as well as improving the absorption of the composition into the leaves and bark. One such class of surfactant is referred to as a benzyl quaternary compound. One specific surfactant is BTC 8358, which is a quaternary compound for formulation into a wide variety of institutional and industrial cleaning applications, water treatment, gas/oil drilling muds/packer fluids, gas/oil recovery injection water systems, gas/oil fracturing fluid systems and wood preservation. Applications include its use as Algaecides, Antimicrobials, Deodorizers, Disinfectants, Fungicides, Preservatives, Sanitizers, Swimming Pool Maintenance, and Water Treatment. The chemical description of the compound is alkyl dimethyl benzyl ammonium chloride. Other classes of acceptable surfactants include, but are not limited to, Polysorbates (e.g. Tween^{™}), Sodium dodecyl sulfate (sodium lauryl sulfate), Lauryl dimethyl amine oxide, Cetyltrimethylammonium bromide (CTAB), Polyethoxylated alcohols, Polyoxyethylene sorbitan, Octoxynol (e.g. Triton X100^{™}), N, N - dimethyldodecylamine-N-oxide, Hexadecyltrimethylammonium bromide (HTAB), Polyoxyl 10 lauryl ether, Brij 721^{™}, Bile salts (sodium deoxycholate, sodium cholate), Polyoxyl castor oil (e.g. Cremophor^{™}), Nonylphenol ethoxylate (e.g. Tergitol^{™}), Cyclodextrins, Lecithin, and Methylbenzethonium chloride (e.g. Hyamine^{™}). The surfactants are used in most formulations to hold the product on the applied surface as long as possible to achieve the maximum benefit of the product. By extending the contact with a plant's leaves, the absorption of nutrients and minerals in compounds in the formulations extends their effects on diseased trees and plants.

When the present composition is used in a root drench or irrigation application, an additional growth stimulant is helpful. For instance, humic acids and fulvic acids and mixtures thereof can help make the plant become more healthy. Fulvic and humic acids are complex molecules which result from the decomposition of organic matter. Healthy soil naturally contains these acids. In contrast, unhealthy and heavily disturbed soils, in which this natural cycle has been disturbed, are depleted of these substances which are vital to the organic processes which result in plant health and vitality. Because most soil is not in an ideal condition, adding humic and fulvic acid directly to soil often results in drastic improvements and helps return it to its pristine natural state. Fulvic and humic acid may also work in the soil to bind up contaminants and render them inactive.

Alternative growth stimulants include the following: Humic (Trace) Minerals (organic, concentrated, liquid, powder), Fulvic (Trace) Minerals (organic, concentrated, liquid, powder), Diatomaceous earth minerals, Ionic Minerals, Trace Earth Minerals, and Rare Earth Minerals.

The foregoing components can be mixed together in concentrated or various dilute mixtures depending on how the composition will be applied to the plants at a grove or farm. Therefore, the relative amounts of composition components are listed herein only in reference to the relative amounts of those components alone.

The following is a list of examples of formulations of the composition:
1.

| | |
|---|---|
| Citrus | 26.11 % |
| Benzylquat (surfactant) | 36.45 |
| Salt Water | 20.88 |
| Humic/Fulvic (growth stimulant) | 13.65 |
| Pine oil | 2.91 |

2.

| | |
|---|---|
| Citrus | 41.78 % |
| Benzylquat | 20.78 |
| Salt Water | 20.88 |
| Humic/Fulvic | 13.65 |
| Pine Oil | 2.91 |

3.

| | |
|---|---|
| Citrus | 34.00 % |
| Benzylquat | 27,71 |
| Salt Water | 20.88 |
| Humic/Fulvic | 13,65 |
| Pine Oil | 3.76 |

4.

| | |
|---|---|
| Citrus | 35.87 % |
| Benzylquat | 27.71 |
| Salt Water | 20.88 |
| Humic/Fulvic | 13.13 |
| Pine Oil | 2.44 |

5.

| | |
|---|---|
| Citrus | 32.42 % |
| Benzylquat | 24.20 |
| Salt Water | 28.36 |
| Humic/Fulvic | 12.63 |
| Pine Oil | 2.39 |

6.

| | |
|---|---|
| Citrus | 32.42 % |
| Benzylquat | 24.20 |
| Salt Water | 28.36 |
| Humic/Fulvic | 12.63 |
| Pine Oil | 2.39 |

7.

| | |
|---|---|
| Citrus | 35.14 % |
| Benzylquat | 27.71 |
| Salt Water | 19.86 |
| Humic/Fulvic | 14.16 |
| Pine Oil | 3.40 |

8.

| | |
|---|---|
| Citrus Peel | 48 % |
| Sea Water (salt water) | 32 |
| Humic/Fulvic | 16 |
| Pine Oil | 4 |

9.

| | |
|---|---|
| Citrus | 40 % |
| Sea Water | 40 |
| Humic/Fulvic | 16 |
| Pine Oil | 4 |

10.

| | |
|---|---|
| Citrus | 8 % |
| Sea Water | 88 |
| Gum Turpentine/Gum Rosin Oil Blend | 4 |

In general, the respective ranges of the components is as follows. As above, the percentages are in volume and relative only to the other components in a concentrated mixture and not to any additional dilutant that may carry the composition.

### FORMULA RANGES:

1.

| | | |
|---|---|---|
| Citrus | 5 - 75% | range |
| | 15 - 50 % | alternative range |

2.

| | | |
|---|---|---|
| Pine Oil (ElPinol 85) | 0.5 - 60% | range |
| | 1.00 - 16 % | alternative range |

3.

| | |
|---|---|
| Surfactant (Benzylquat) | 0.05 - 30% range |
| (optional component) | 10 - 25 % alternative range |

4.

| | |
|---|---|
| Salt water | 15 - 95 % range |
| | 20 - 40 % alternative range |

5.

| | |
|---|---|
| Growth stimulant | |
| (Humic/Fulvic acid) | 0.01 - 20% range |
| (optional component) | 10 - 17% alternative range |

In certain applications where the composition is diluted in water, the treatment ranges include the following volume of concentrated formula/composition versus water.
1. Foliar application ranges: 10 - 90 milliliters, or alternatively 5 - 200 milliliters of concentrated composition per gallon of water.
2. Root drench application ranges: 30 - 140 milliliters, or alternatively 10 - 200 milliliters of concentrated composition per gallon of water.
3. Irrigation application ranges: 10 - 90 milliliters, or alternatively 5 - 200 milliliters of concentrated composition per gallon of water.

Each of these types of plant applications are discussed below. These examples of composition application are directed to treatment of citrus trees, but the applications will be similar for other plants as well with each application adjusted for the specific types of plants.

**Foliar Spray application** - Essentially all citrus in Florida receive foliar spray applications which consist of fungicides, insecticides, and/or nutritionals. Most foliar sprays are applied by airblast sprayers. These sprayers are generally pulled by tractors at 1-3 miles per hour. The tanks on the sprayers are generally 500-1000 gallons in size. There are some sprayers mounted on trucks. The sprayers consist of a 500-1000 gallon tank to hold the spray mix, multiple nozzles which are mounted on the rear of the sprayer. The nozzles are mounted adjacent and to the side of a large fan which propels the spray onto/into the canopy of the tree. The sprayers are driven between the rows of trees. There are a few smaller, low volume sprays used and some foliar sprays are applied by air. The smaller concentrate sprays apply from 50-150 gallons per acre and the spray planes apply 5-20 gallons per acre. Planes are generally used on the larger acreage groves.

**Root Drench Application** - A root drench, also referred to as a soil drench, is applied when the soil around the plant's base is slightly moist. Temporarily raking back mulch, leaves or other material covering the soil and the uppermost inch of soil within 1 foot of the plant's base limits the impact of evaporation on the chemicals applied to the soil, and it gets the chemical into the tree faster. The amounts of fertilizer and water used in a soil drench are typically calculated based on the concentration of the fertilizer and the area of soil it is used on. Pesticides and other chemicals used on trees are calculated based on the diameter of the tree's trunk and the manufacturer's recommendation for the chemical you are using.

**Irrigation Systems** - In Florida there are generally 3 types of systems.
1. Microjets - Low volume systems with sprinklers adjacent to each tree and sometimes a sprinkler between two trees. The sprinklers cover areas from 10-20 feet in diameter. There are a few other configurations. The gallonage applied and the irrigation schedule depends upon the desires of the grove owners. Usually 0.5-1.0 acre inches of water are applied at each irrigation. With the onset of HLB (greening) some growers are applying multiple irrigations with less water per application. The water is supplied from wells in the grove and operated by large electric or diesel pumps. Fungicides, insecticides, and/or nutritionals and fertilizers are often injected into the system. The injection system is located near the pump. Injection is a very economical method for applying materials to the soil as a soil application or a drench. After the injection of materials early in the irrigation event, the irrigation event is continued to flush the irrigation lines and to apply the desired water to the grove.
2. Flood Irrigation - there are a few groves in south Florida that are irrigated by flooding. The trees are planted on raised beds with ditches on either side of the beds. Large volumes of water are pumped into the ditches or are supplied by canals and gravity fed. The ditches between the rows are slightly sloped in order for the water to travel down the ditches. This system in not suited for applying fungicides, insecticides, fertilizer or nutritionals.
3. Overhead - This method is currently seldom used as it is not economical and can result in increased fungal problems on trees. This system was once widely used until the advent of microjets. These systems are not suitable for injecting materials.
4. Seepage Irrigation - In the flatwoods areas of citrus culture (near the coasts and in south Florida), canals adjacent to the groves are flooded and the water seeps through the soil profile to the citrus trees. This is not a widely used method. This method is not suitable for injecting materials into the irrigation water.

### Example 1

### Florida Hamlin Grove Field Trial June 27, 2017

### LOCATION

Umatilla, Florida

### CROP VARITY

Hamlin Orange Trees (8'- 10' Feet in Height)
Planted 01/01/2005

### TIME FRAME

Fruit was harvested on November 14, 2017
The field trial began on June 27^{th}, 2017 in a Hamlin Grove in Umatilla, Florida. 15 randomly selected trees were selected for this trial. Five trees were to be used to evaluate Treatment 1 formula WE1/WE2 and another set of five trees were selected to evaluate Treatment 2 formula WE3/WE4. The remaining five trees from this select group of trees were to remain untreated. It should be noted that the grove owner continued his standard treatment applications of fertilizers, pesticides, insecticides, fungicides, etc. on all his Hamlin Orange trees in this grove (including the fifteen trees in this field trial).

### TREATMENT APPLICATION INFORMATION

1^{ST} Full Foliar spray - June 30, 2017
1^{st} Root Drench (3' Perimeter of each tree) - June 30 2017
2^{nd} Full Foliar Spray - July 18, 2017
2^{nd} Root Drench (3' Perimeter of each tree) - August 7, 2017
3^{rd} Full Foliar spray - August 7, 2017

### Spray Equipment - CO2 Backpack with D8-45 Cone type nozzle at 40 PSI

One gallon of diluted treatment (45 milliliters concentrated formula/gallon of water) applied as a foliar spray and one gallon of diluted treatment (65 milliliters concentrated formula/gallon of water) applied within a three foot radius of the tree trunk as soil drench.

The material was additionally sprayed onto the soil from the trunk to the drip line with a hand sprayer. Growers might alternatively apply the soil application through microjet irrigation. Each micro jet covers various surface areas depending upon the grower. The approximate surface area of treatment would be 14-16 feet in diameter. The growers may apply using their herbicide applicator that would apply from the trunk of the trees to just outside the drip line of the trees; approximately a 6-8 feet. band on both sides of the trees.

### Treatment 1

| | |
|---|---|
| Citrus | 34.85 |
| Benzyl quat | 27.71 |
| Salt water | 20.89 |
| Humic | 13.65 |
| Pine oil | 2.90 |

### Treatment 2

| | |
|---|---|
| Citrus Peel | 40 % |
| Benzyl Quat | 21 |
| Sea Water | 20 |
| Humic/Fulvic | 15 |
| Pine Oil | 4 |

### PROTOCOL

The field trial was conducted using the Citrus Research Development Foundation's Field Trial Tree Evaluation Methods dated March 11, 2016.

Initial evaluations and pictures were taken on June 27^{th}, 2017 before any applications were made, with the purpose to establish a base line for future evaluations.

HLB-Mature leaves and expanded flush leaves were collected prior to any applications. The CT values for the old leaves indicated heavy citrus HLB greening on all the trees.

### FIELD TRIAL RESULTS

1) The tree "foliage vigor" values for the untreated trees dropped or remained the same. There were no significant differences in the values between the two treatments on both post application evaluations. On August 7^{th}, 2017, the foliage vigor values of the treated trees increased numerically from the pre-treatment evaluations. The foliage vigor values of the untreated trees changed very little.
2) On June 27^{th}, 2017, there was no significant differences in the percent of new flush between treatments. Treatment 1 trees had numerically more new flush than did the untreated trees. On July 12^{th}, 2017, Treatment 2 trees had significantly more new flush than Treatment 1 trees and the untreated trees. On August 7^{th}, 2017, Treatment 1 trees had significantly more new flush than both Treatment 2 trees and untreated trees. Often times with a great deal of flush on one date of evaluation will lead to less flush on the following evaluation date.
3) Ten randomly selected flushes were selected from each tree and their lengths were measured individually. Flushes from both sets of treated trees had slightly longer flushes compared to untreated trees. The evaluated data collected during the course of this trial, indicates that the tree vigor improved in the treated trees vs. the untreated trees. The increase of foliage vigor and new flush growth during the fall 2017 season is a particularly important indicator for the crop size during the 2018 harvest.
4) On average, the treated trees dropped significantly fewer fruit during this field trial compared to the untreated trees. The comparative fruit drop results indicate that the treated trees had higher harvest yields compared to untreated trees.

| | |
|---|---|
| Average % lower fruit drop of Treatment 1 compared to Untreated | 23.06% |
| Average % lower fruit drop of Treatment 2 compared to Untreated | 25.18% |

| Citrus Greening Treatment Project Overall Tree - Length of NEW Foliage | | | |
|---|---|---|---|
| Orange Hamlin Grove in Florida | | | |
| Date of Evaluation | Treatment 1 | Treatment 2 | Untreated |
| 7/17/2017 Flush length in Inches | 6.47 | 6.256 | 6.03 |
| % increase compared to the untreated trees | 107.30% | 103.80% | 100% |
| 12/1/2017 Flush Length in Inches | 5.62 | 5.24 | 5.03 |
| % increase compared to the untreated trees | 111.73% | 104.17% | 100% |

### HAMLIN ORANGE FRUIT DROP NOVEMBER 14,

2017

| TREE CONTROL | Total Dropped Fruit | Harvested Fruit | Total Fruit | % of Dropped Fruit |
|---|---|---|---|---|
| Treatment 1 | 58 | 472 | 530 | 10.94% |
| Treatment 1 | 86 | 291 | 377 | 22.81% |
| Treatment 1 | 57 | 214 | 271 | 21.00% |
| Treatment 1 | 62 | 218 | 280 | 22.14% |
| Treatment 1 | 77 | 213 | 290 | 26.55% |
| **Average % Treatment 1 Trees** | | | | **20.69%** |
| Treatment 2 | 33 | 393 | 426 | 7.74% |
| Treatment 2 | 65 | 178 | 243 | 26.75% |
| Treatment 2 | 55 | 205 | 260 | 21.15% |
| Treatment 2 | 49 | 131 | 180 | 27.22% |
| Treatment 2 | 53 | 246 | 299 | 17.72% |
| **Average % Treatment 2 Trees** | | | | **20.12%** |
| untreated | 120 | 263 | 383 | 31.33% |
| untreated | 104 | 206 | 310 | 33.55% |
| untreated | 94 | 372 | 466 | 20.17% |
| untreated | 113 | 240 | 353 | 32.00% |
| untreated | 48 | 228 | 276 | 17.39% |
| **Average % Untreated Trees** | | | | **26.89%** |

### Citrus Greening Treatment Project Average Weight of Root Samples on September 28, 2017

| | Treatment 1 | Treatment 2 | Untreated |
|---|---|---|---|
| Wet Root Weight in Grams | 1.88 | 3.64 | 2.54 |
| Dry Root Weight in Grams | 0.8 | 1.76 | 1.12 |
| Average % improvement compared to Untreated (Wet) | no improvement | 43.31% | |
| Average % improvement compared to Untreated (Dry) | no improvement | 57.14% | |

### Citrus Greening Treatment Project Average Ratio Solids(BRIXs)/Acid Tested on November 14, 2017

| | Treatment 1 | Treatment 2 | Untreated |
|---|---|---|---|
| | 13.55 | 14.5 | 13.54 |
| Average % improvement compared to Untreated | no improvement | 7.09% | |

### Example 2

### Experimental Trial in Arcadia, Greece

In July 2017, several types of trees in Agiorgitika, a small village outside of Tripoli in Arcadia, Greece, had symptoms of a pathogen(s) and various insects on the trees. On July 20, 2017 a mixture of the three ingredients listed below was prepared and a foliar spray as well as a root drench were applied on a single tree/plant from each different species of tree/plant found in the garden. The list of trees/plants included almond, olive, cherry, pear, chestnut, walnut, and a grape vine. Upon, revisiting the garden on July 30, 2017 there was observable improvement in the health of all the treated trees/plants except the almond tree. The treated almond tree's observable health did not worsen as compared to the untreated almond trees. It should be noted that a devastating "almond blight" pathogen was killing several dozens of almond trees throughout the village including some trees that were over 250 years old. The treated pear tree and treated grape vine exhibited the greatest observable improvement as compared to the untreated pear tree and grape vine. The treated pear tree's foliage showed improved vigor and improved leaf color as compared to the untreated pear tree.

The grape vine showed the most improvement from all the treated trees/plants in this garden. There was no new "browning" of the grape leaves, no withering of the new flush, and the some of the ne flush grew by four inches from the day of treatment. The untreated grape vines had continued leaf browning, some withering of new flush, and maximum length of the new flush was two inches. Leaf samples of the browning grape leaves were given to Benaki Pathological Institute (BPI) in Kifissia, Greece for evaluation. On September 15^{th}, 2017 BPI's lab results indicated that the pathogen in the grape leaf samples was the Grapevine Pinot Gris Virus (GPGV) caused by a spider mite called Colomerus vitis. GPGV is part of the Betaflexiviridae family of viruses.

### Treatment Formula Used;

| | |
|---|---|
| Citrus | 8% |
| Sea Water | 88 |
| Gum Turpentine/Gum Rosin Oil Blend | 4 |

### Dates of Foliar/Root Drench Applications;

July 20, 2017
August 10, 2017

### Dosage:

1 Liter of concentrated formula Grape vine foliar and root drench
3 Liters of concentrated formula of the foliar and root drench applications on Almond, Cherry, Pear, Walnut, Olive, and Chestnut trees.

### Example 3

### Additional Field Trials - Summary results

In each of these additional field trials, a particular composition formulation was used to assess its effectiveness in treating various citrus plants. This formulation is referred to in these trial summaries as "CitruSaver fertilizer". The formulation used with the indicated amount of water dilutant was as follows:

| | |
|---|---|
| MB - 80 (surfactant) | 17.10 |
| HUMIC/FULVIC ACID | 2.29 |
| CITRUS | 34.61 |
| L-PINOL 85 | 4.70 |
| SALT WATER | 5.84 |
| WATER | 35.48 |
| | 100.00 % |
| FOR CANKER | |
| FOLIAR SPRAY ONLY: | 43 MILLILITERS PER 2 GALLONS OF WATER |

The additional trials and results were as follows:
**I.** Hamlin Trial #1 (started in June 2017) (Citrus Greening)
   Field trial involved 10 CitruSaver Fert. treated and 10 untreated trees in the same row on a commercial grove in Umatilla, Florida. Three applications of CitruSaver fertilizer were applied to both the root and foliage of 10 treated trees. By the time the fruit was harvested in November 2017, 17.09% of the fruit dropped from the treated trees vs. 25.41% of the untreated trees. There was 85% more new flush on the treated trees vs. the untreated trees 17 days after the first application. Overall tree vigor improved by 80% on the treated trees vs. 7% on the untreated trees 40 days after the first application. Root weight of the treated trees increased by 43% more than the root weight of the untreated trees. At the time of the fruit was harvested, the treated trees were 7% sweeter than the fruit from the untreated trees.
**II.** Valencia Trial #1 (started in August 2017) (Citrus Greening)
   Field trial involved 4 CitruSaver Fert. treated and 4 untreated trees in the same row on a commercial grove in Umatilla, Florida. Three applications of CitruSaver fertilizer were applied to both the root and foliage of 4 treated trees. The fruit dropped from the treated trees was 32% lower than the untreated trees. There was 95% more new flush on the treated trees vs. the untreated trees 55 days after the first application. Root weight of the treated trees increased by 89% more than the root weight of the untreated trees. At the time of the fruit was harvested, the treated trees were 9% sweeter than the fruit from the untreated trees.
**III.** Hamlin Trial #2 (started in March 2018) (Citrus Greening)
   Field trial involved 10 CitruSaver Fert. treated and 10 untreated trees in the same row on a commercial grove in Umatilla, Florida. Three applications of CitruSaver fertilizer were applied to both the root and foliage of 10 treated trees. The treated trees dropped 27% less fruit than the untreated trees. There was 195% more new flush on the treated trees vs. the untreated trees 70 days after the first application... At the time of the fruit was harvested, the treated trees were 7% sweeter than the fruit from the untreated trees. The fruit from the treated trees were 22% heavier than the fruit from the untreated trees at the time of harvest in December 2018,
**IV.** Graprefruit Trial #1 (started in March 2018) (Citrus Greening/Citrus Canker/Melanose)
   Field trial involved 10 CitruSaver Fert. treated and 10 untreated trees in the same row on a commercial grove in Umatilla, Florida. Several applications of CitruSaver fertilizer were applied to both the root and foliage of 10 treated trees. The treated trees dropped 13% less fruit than the untreated trees. There were 32% more new flushes on the treated trees vs. the untreated trees 4 months after the first application. In October 2018, the average number of fruit with citrus canker on the treated trees was 5.3 vs. 9.2 on the untreated trees. The average number of leaves with citrus canker on the treated trees was 16.8 vs. 31.2 on the untreated trees. On a severity scale between 0-5, the treated trees had a severity of 2.5 vs. 2.7 for the untreated trees.

Other embodiments of the present invention will be apparent to those skilled in the art from consideration of the specification. It is intended that the specification and figures be considered as exemplary only, the scope of the invention and thus of protection is defined by the claims.

## Claims

1. An antimicrobial composition comprising a treatment of plants prone to microbial disease, wherein the composition includes:
citrus oil, pine oil and salt water, wherein the relative amounts, as measured by volume, of the three components as compared with each other are
a) 5 - 75% citrus oil;
b) 0.5 - 60% pine oil; and
c) 15 - 95% salt water,
wherein the salt water is sea water that is sourced from any sea or ocean.

2. An antimicrobial composition as described in claim 1,
wherein the composition further includes a surfactant and the relative amount, as measured by volume, of the surfactant is 0.05 - 30%.

3. An antimicrobial composition as described in claim 2,
wherein the sufactant comprises alkyl dimethyl benzyl ammonium chloride.

4. An antimicrobial composition as described in claim 1,
wherein the composition further includes a growth stimulant and the relative amount, as measured by volume, of the growth stimulant is 0.1 - 20%.

5. An antimicrobial composition as described in claim 4,
wherein the growth stimulant comprises humic acid.

6. An antimicrobial composition as described in claim 4,
wherein the growth stimulant comprises fulvic acid.

7. An antimicrobial composition as described in claim 1, for the treatment of plants prone to gram-negative bacteria disease, wherein the composition includes:
citrus oil, pine oil, salt water, a surfactant, and a growth stimulant wherein the relative amounts, as measured by volume, of the five components as compared with each other are
a) 5 - 75% citrus oil;
b) 0.5 - 60% pine oil;
c) 15 - 95% salt water;
d) 0.05 - 30% surfactant; and
e) 0.1 - 20% growth stimulant,
wherein the salt water is sea water that is sourced from any sea or ocean.

8. A method of treating a plant prone to gram-negative bacteria disease comprising the steps of:
providing a composition including citrus oil, pine oil and salt water, wherein the relative amounts, as measured by volume, of the three components as compared with each other are
a) 5 - 75% citrus oil;
b) 0.5 - 60% pine oil;
c) 15 - 95% salt water; and
applying the composition to the plant in an amount effective to mitigate the gram-negative bacteria disease,
wherein the salt water is sea water that is sourced from any sea or ocean.

9. A method of treating the foliage of a plant prone to gram-negative bacteria disease comprising the steps of:
providing a composition including citrus oil, pine oil, salt water, and a surfactant
wherein the relative amounts, as measured by volume, of the four components as compared with each other are
a) 5 - 75% citrus oil;
b) 0.5 - 60% pine oil;
c) 15 - 95% salt water;
d) 0.05 - 30% surfactant; and
applying the composition to the foliage of the plant in an amount effective to mitigate the gram-negative bacteria disease,
wherein the salt water is sea water that is sourced from any sea or ocean.

10. A method of treating the roots of a plant prone to gram-negative bacteria disease comprising the steps of:
providing a composition including citrus oil, pine oil, salt water, and a growth stimulant wherein the relative amounts, as measured by volume, of the four components as compared with each other are
a) 5 - 75% citrus oil;
b) 0.5 - 60% pine oil;
c) 15 - 95% salt water;
d) 0.01 - 20% growth stimulant; and
supplying the composition to the roots of the plant in an amount effective to mitigate the gram-negative bacteria disease,
wherein the salt water is sea water that is sourced from any sea or ocean.

## Patentansprüche

1. Antimikrobielle Zusammensetzung zur Behandlung von Pflanzen, die für eine mikrobielle Erkrankung anfällig sind, wobei die Zusammensetzung umfasst:
Zitrusöl, Kiefernöl und Salzwasser, wobei die relativen Mengen, auf das Volumen gemessen, der drei Komponenten im Vergleich zueinander
a) 5 - 75 % Zitrusöl;
b) 0,5 - 60 % Kiefernöl; und
c) 15 - 95 % Salzwasser sind;
wobei das Salzwasser Meerwasser ist, das von irgendeinem Meer oder Ozean bezogen ist.

2. Antimikrobielle Zusammensetzung nach Anspruch 1,
wobei die Zusammensetzung ferner ein Tensid umfasst und die relative Menge, auf das Volumen gemessen, des Tensids 0,05 - 30 % ist.

3. Antimikrobielle Zusammensetzung nach Anspruch 2,
wobei das Tensid Alkyldimethylbenzylammoniumchlorid umfasst.

4. Antimikrobielle Zusammensetzung nach Anspruch 1,
wobei die Zusammensetzung ferner ein Wachstumsstimulans umfasst und die relative Menge, auf das Volumen gemessen, des Wachstumsstimulans 0,1 - 20 % ist.

5. Antimikrobielle Zusammensetzung nach Anspruch 4,
wobei das Wachstumsstimulans Huminsäure umfasst.

6. Antimikrobielle Zusammensetzung nach Anspruch 4,
wobei das Wachstumsstimulans Fulvinsäure umfasst.

7. Antimikrobielle Zusammensetzung nach Anspruch 1 für die Behandlung von Pflanzen, die für eine Erkrankung mit gramnegativen Bakterien anfällig sind, wobei die Zusammensetzung umfasst:
Zitrusöl, Kiefernöl, Salzwasser, ein Tensid und ein Wachstumsstimulans, wobei die relativen Mengen, auf das Volumen gemessen, der fünf Komponenten im Vergleich zueinander
a) 5 - 75 % Zitrusöl;
b) 0,5 - 60 % Kiefernöl;
c) 15 - 95 % Salzwasser;
d) 0,05 - 30 % Tensid; und
e) 0,1 - 20 % Wachstumsstimulans sind;
wobei das Salzwasser Meerwasser ist, das von irgendeinem Meer oder Ozean bezogen ist.

8. Verfahren zum Behandeln einer Pflanze, die für eine Erkrankung mit gramnegativen Bakterien anfällig ist, mit den Schritten:
Bereitstellen einer Zusammensetzung mit Zitrusöl, Kiefernöl und Salzwasser, wobei die relativen Mengen, auf das Volumen gemessen, der drei Komponenten im Vergleich zueinander
a) 5 - 75 % Zitrusöl;
b) 0,5 - 60 % Kiefernöl;
c) 15 - 95 % Salzwasser sind; und
Aufbringen der Zusammensetzung auf die Pflanze in einer Menge, die wirksam ist, um die Erkrankung mit gramnegativen Bakterien zu mildern;
wobei das Salzwasser Meerwasser ist, das von irgendeinem Meer oder Ozean bezogen ist.

9. Verfahren zum Behandeln des Blattwerks einer Pflanze, die für eine Erkrankung mit gramnegativen Bakterien anfällig ist, mit den Schritten:
Bereitstellen einer Zusammensetzung mit Zitrusöl, Kiefernöl, Salzwasser und einem Tensid, wobei die relativen Mengen, auf das Volumen gemessen, der vier Komponenten im Vergleich zueinander
a) 5 - 75 % Zitrusöl;
b) 0,5 - 60 % Kiefernöl;
c) 15 - 95 % Salzwasser;
d) 0,05 - 30 % Tensid sind; und
Aufbringen der Zusammensetzung auf das Blattwerk der Pflanze in einer Menge, die wirksam ist, um die Erkrankung mit gramnegativen Bakterien zu mildern;
wobei das Salzwasser Meerwasser ist, das von irgendeinem Meer oder Ozean bezogen ist.

10. Verfahren zum Behandeln der Wurzeln einer Pflanze, die für eine Erkrankung mit gramnegativen Bakterien anfällig ist, mit den Schritten:
Bereitstellen einer Zusammensetzung mit Zitrusöl, Kiefernöl, Salzwasser und einem Wachstumsstimulans, wobei die relativen Mengen, auf das Volumen gemessen, der vier Komponenten im Vergleich zueinander
a) 5 - 75 % Zitrusöl;
b) 0,5 - 60 % Kiefernöl;
c) 15 - 95 % Salzwasser;
d) 0,01 - 20 % Wachstumsstimulans sind; und
Zuführen der Zusammensetzung zu den Wurzeln der Pflanze in einer Menge, die wirksam ist, um die Erkrankung mit gramnegativen Bakterien zu mildern;
wobei das Salzwasser Meerwasser ist, das von irgendeinem Meer oder Ozean bezogen ist.

## Revendications

1. Composition antimicrobienne pour le traitement de plantes sujettes à une maladie microbienne, la composition incluant :
une essence d'agrumes, de l'huile de pin et de l'eau salée, les quantités relatives, lorsqu'elles sont mesurées en volume, des trois composants comparés les uns aux autres étant :
a) 5 à 75 % d'essence d'agrumes ;
b) 0,5 à 60 % d'huile de pin ; et
c) 15 à 95 % d'eau salée ;
l'eau salée étant de l'eau de mer provenant d'une mer ou d'un océan quelconque.

2. Composition antimicrobienne selon la revendication 1,
la composition incluant en outre un tensioactif et la quantité relative, lorsqu'elle est mesurée en volume, du tensioactif étant de 0,05 à 30 %.

3. Composition antimicrobienne selon la revendication 2,
le tensioactif comportant du chlorure d'alkyl diméthyl benzyl ammonium.

4. Composition antimicrobienne selon la revendication 1,
la composition incluant en outre un stimulant de croissance et la quantité relative, lorsqu'elle est mesurée en volume, du stimulant de croissance étant de 0,1 à 20 %.

5. Composition antimicrobienne selon la revendication 4,
dans laquelle le stimulant de croissance comporte
de l'acide humique.

6. Composition antimicrobienne selon la revendication 4,
dans laquelle le stimulant de croissance
comporte de l'acide fulvique.

7. Composition antimicrobienne selon la revendication 1 pour le traitement de plantes sujettes à une maladie bactérienne à Gram négatif, la composition incluant :
une essence d'agrumes, de l'huile de pin, de l'eau salée, un tensioactif et un stimulant de croissance, les quantités relatives, lorsqu'elles sont mesurées en volume, des cinq composants comparés les uns aux autres étant :
a) 5 à 75 % d'essence d'agrumes ;
b) 0,5 à 60 % d'huile de pin ;
c) 15 à 95 % d'eau salée ;
d) 0,05 à 30 % de tensioactif; et
e) 0,1 à 20 % de stimulant de croissance ;
l'eau salée étant de l'eau de mer provenant d'une mer ou d'un océan quelconque.

8. Procédé de traitement d'une plante sujette à une maladie bactérienne à Gram négatif, comportant les étapes consistant à :
fournir une composition incluant une essence d'agrumes, de l'huile de pin et de l'eau salée, les quantités relatives, lorsqu'elles sont mesurées en volume, des trois composants comparés les uns aux autres étant :
a) 5 à 75 % d'essence d'agrumes ;
b) 0,5 à 60 % d'huile de pin ;
c) 15 à 95 % d'eau salée ; et
appliquer la composition sur la plante dans une quantité efficace pour atténuer la maladie bactérienne à Gram négatif ;
l'eau salée étant de l'eau de mer provenant d'une mer ou d'un océan quelconque.

9. Procédé de traitement du feuillage d'une plante sujette à une maladie bactérienne à Gram négatif, comportant les étapes consistant à :
fournir une composition incluant une essence d'agrumes, de l'huile de pin, de l'eau salée et un tensioactif, les quantités relatives, lorsqu'elles sont mesurées en volume, des quatre composants comparés les uns aux autres étant :
a) 5 à 75 % d'essence d'agrumes ;
b) 0,5 à 60 % d'huile de pin ;
c) 15 à 95 % d'eau salée ;
d) 0,05 à 30 % de tensioactif; et
appliquer la composition sur le feuillage de la plante dans une quantité efficace pour atténuer la maladie bactérienne à Gram négatif ;
l'eau salée étant de l'eau de mer provenant d'une mer ou d'un océan quelconque.

10. Procédé de traitement des racines d'une plante sujette à une maladie bactérienne à Gram négatif, comportant les étapes consistant à :
fournir une composition incluant une essence d'agrumes, de l'huile de pin, de l'eau salée et un stimulant de croissance, les quantités relatives, lorsqu'elles sont mesurées en volume, des quatre composants comparés les uns aux autres étant :
a) 5 à 75 % d'essence d'agrumes ;
b) 0,5 à 60 % d'huile de pin ;
c) 15 à 95 % d'eau salée ;
d) 0,01 à 20 % de stimulant de croissance ; et
fournir la composition aux racines de la plante dans une quantité efficace pour atténuer la maladie bactérienne à Gram négatif ;
l'eau salée étant de l'eau de mer provenant d'une mer ou d'un océan quelconque.
